**Europäisches Patentamt**

**European Patent Office**

**Office européen des brevets**

(19)

(11) Numéro de publication: **0 243 264**
**A1**

## (12) DEMANDE DE BREVET EUROPEEN

(21) Numéro de dépôt: **87400919.4**

(22) Date de dépôt: **21.04.87**

(51) Int. Cl.³: **A 01 C 11/02**

(30) Priorité: **23.04.86 FR 8606071**
**28.05.86 FR 8607914**

(43) Date de publication de la demande:
**28.10.87 Bulletin 87/44**

(84) Etats contractants désignés:
**DE ES GB IT**

(71) Demandeur: **ATELIERS DE CLAIRE FONTAINE**
**La Chapelle Basse Mer**
**F-44050 Saint-Julien De Concelles(FR)**

(72) Inventeur: **Simon, Gaston**
**Le Moulin de Claire Fontaine**
**F-44450 La Chapelle Basse Mer(FR)**

(74) Mandataire: **Le Brusque, Maurice et al,**
**Cabinet Harlé et Phélip 21, rue de la Rochefoucauld**
**F-75009 Paris(FR)**

(54) **Planteuse de plants en mottes.**

(57) Machine permettant une plantation entièrement auto-matisée de plants de légumes ou de fleurs cultivés en mottes, particulièrement destinée aux exploitations dans lesquelles la culture s'effectue en planches séparées par des allées de circulation dites passe-pieds.

Elle se compose: d'un ensemble porte-plateau (A) et d'extraction des mottes, – d'un ensemble (B) basculant et extensible de prise en charge, de démariage, et de transfert des mottes, – d'un ensemble (C) de convoyage, en circuit fermé, des plants dans des godets suspendus ouvrants. Ces ensembles sont montés sur un châssis articulé comportant des moyens de préparation et de ragréage du sol.

Selon une premier mode de réalisation, l'ensemble (C) de convoyage assure la dépose des plants au sol; selon un second mode de réalisation, l'ensemble (C) de convoyage alimente un dispositif (D) de retournement des plants, associé à un dispositif planteur (E) qui assure une parfaite verticalité du plant dans le sillon.

FIG 4

EP 0 243 264 A1

- 1 -

La présente invention concerne les machines destinées à réaliser de façon mécanique la plantation de plants cultivés en mottes.

Il est de plus en plus connu la technique consistant à cultiver les plants de légumes ou de fleurs dans une motte de forme et de dimensions parfaitement calibrées, chaque motte étant obtenue par moulage de terreau dans une des alvéoles d'un plateau en matière plastique, permettant ensuite l'expédition des plants sur les lieux de plantation. Cette technique a pour objectif la mécanisation et l'automatisation des opérations de plantation.

La machine, suivant l'invention, a pour but la plantation entièrement automatisée de plants cultivés en mottes, la fonction de la seule personne affectée à cette machine étant limitée à l'approvisionnement en plateaux de ladite machine. L'invention concerne plus particulièrement une machine destinée à la plantation de légumes ou de fleurs dans des planches de culture délimitées par des allées de circulation couramment dénommées passe-pieds.

On connaît des machines de ce type permettant une plantation automatique de jeunes plants, comme celle décrite tout d'abord dans le document US-A-3.446.164 qui montre une planteuse comprenant un support horizontal de plateaux alvéolés contenant les jeunes plants, des goulottes verticales placées sous les plateaux et des moyens permettant une libération des plants de leur plateau. Chaque plant se libère par gravité et, guidé par la goulotte, se positionne en terre dans le sillon préparé à cet effet et refermé aussitôt la mise en place de la motte.

Dans un second document, FR-A-2.432.265, la machine de plantation comprend un support vertical du plateau alvéolé contenant les jeunes plants, un organe poussoir pour dégager un par un les jeunes plants de leur alvéole et un système de préhension du plant constitué d'un bras qui oscille entre une position horizontale correspondant à la position de prise en charge du plant par des pinces et une position verticale qui correspond à la mise en terre du plant où il est laché par les pinces.

- 2 -

La première de ces machines, décrite dans le brevet US 3.446.164, ne permet pas de réussir une plantation à cent pour cent lorsque, en particulier, les jeunes plants sont emmêlés sur le plateau alvéolé comme dans le cas de plants de tomate, choux, céleri, etc ... Ce type de plant ne peut pas se libérer tout seul par simple gravité ; les tiges et/ou feuilles peuvent effectivement être totalement emmêlées ; dans certains cas en effet, la hauteur de la motte ne représente que le quart de la hauteur de la tige de la plante..

Dans le cas de la machine selon le brevet FR-A-2.432.265 les jeunes plants sont poussés par le fond hors de leur alvéole avant d'être pris en charge par des pinces. Une telle machine permet une extraction sûre mais à une cadence très limitée puisqu'elle s'effectue à l'unité et qu'ensuite, c'est la pince elle-même qui va mettre le plant en terre ; la vitesse de plantation est donc très faible.

On a proposé, comme dans le document EP-A-0.043.427, des moyens qui permettent de faire sortir une rangée complète de jeunes plants d'un plateau disposé verticalement devant un carroussel, en les poussant par le fond pour les amener de façon séquentielle sur une série de petites palettes solidaires du carroussel, recevant chacune un seul plant. Le mouvement d'avance du carroussel est, lui aussi, séquentiel, pour être chargé avec des rangées de plants, posées successivement sur les petites palettes. Un tel dispositif ne permet pas d'améliorer la libération des plants véritablement emmêlés dans le plateau alvéolé ; un tel dispositif ne peut garantir une plantation à cent pour cent et de plus les plants sont libres sur les petites palettes du carroussel ; ils risquent de tomber dans les angles car les feuillages des mottes adjacentes ne sont pas démêlés.

La présente invention permet de remédier aux différents inconvénients des machines existantes. Elle permet en particulier d'améliorer la libération des jeunes plants entre eux, sans risquer de les détériorer, c'est-à-dire d'arracher les tiges et/ou les feuilles.

- 3 -

L'invention a principalement pour objet une machine de plantation automatique qui permet entre autres, de démarier totalement les jeunes plants, par rangée tout d'abord, puis l'un envers l'autre ensuite, sur une même rangée.

Toujours selon l'invention, cette opération qui consiste à démarier les plants adjacents d'une même rangée s'effectue simultanément à l'opération de transfert et de présentation des plants démariés sur le dispositif de convoyage des plants en vue de leur mise en terre.

La machine, objet de l'invention, est du type semi-portée comportant un train de deux roues porteuses et deux pattes d'attache destinées à l'attelage de la machine sur le dispositif trois points d'un tracteur agricole ou portée sur quatre roues. Elle est constituée d'un châssis principal réalisé en profilés creux soudés selon un cadre rectangulaire, sur les côtés longitudinaux duquel sont soudées des jambes verticales sur lesquelles sont montées les roues porteuses, la traverse avant duquel châssis comporte lesdites pattes d'attache ainsi que des paliers d'axes horizontaux dans lesquels tourillonnent des axes de basculement d'un ou de plusieurs châssis secondaires ; une telle structure de châssis permet, par la latitude de basculement des châssis secondaires, d'obtenir une régularité de profondeur de plantation quelle que soit la planéité de la planche de culture et la variation de hauteur de celle-ci par rapport aux passe-pieds sur lesquels circulent les roues porteuses du châssis ; sur chacun des châssis secondaires est montée une unité de plantation constituée :

- d'un ensemble porte-plateaux et d'extraction des mottes,
- d'un ensemble de prise en charge des mottes et de transfert,
- d'un ensemble de convoyage en vue de la dépose des plants au sol,
- d'un ensemble de préparation et de ragréage du sol.

Selon l'invention, l'ensemble de prise en charge des mottes et de transfert consiste en un dispositif permettant de réaliser une opération de démariage des plants ; ce dispositif comprend une batterie de pinces de préhension en nombre égal à celui des alvéoles d'une même rangée transversale du plateau : ces pinces sont réalisées chacune au moyen de deux lames flexibles fixées sur un patin porte-pinces. Les patins porte-pinces sont montés coulissants sur un jeu de deux tiges de guidage tendues, parallèles, implantées par leurs extrémités dans deux flasques supports basculants. Les pinces sont disposées transversalement au sens de déplacement des plateaux. Au moment de la prise en charge des mottes, les patins porte-pinces sont disposés en appui latéral les uns contre les autres plaçant l'extrémité des pinces selon un intervalle correspondant à celui des alvéoles d'une même rangée transversale du plateau. Sitôt la fermeture des pinces sur les mottes, après soulèvement de ces dernières par les tiges poussoirs, les patins porte-pinces s'écartent les uns des autres en même temps que l'ensemble bascule sous l'action de vérins hydrauliques agissant en poussée sur les flasques supports des tiges de guidage. La variation d'espacement des patins est assurée au moyen d'un dispositif d'entrainement par chaine disposée selon une boucle fermée entre une roue dentée libre et une roue dentée d'entrainement clavetée sur la sortie d'arbre d'un moteur hydraulique ; un des patins porte-pinces d'extrémité de la batterie étant entrainé en translation par ladite chaine, entrainant lui-même les autres patins à l'aide d'une chaine intercalaire de longueur déterminée pour assurer en fin d'extension de la batterie de pinces un intervalle entre celles-ci correspondant à celui des réceptacles équipant l'ensemble de convoyage. Les lames flexibles constituant les pinces de préhension ont leurs extrémités convergentes en position repos, leur degré de flexibilité est déterminé de façon à assurer des pressions de contact suffisantes sur la motte, sans toutefois risquer d'écraser celle-ci. L'ouverture de la pince s'obtient par la translation entre les lames d'un curseur en téflon monté à l'extrémité d'une tige coulissante, sous l'action de vérins à commande hydraulique. Lorsque les pinces ont libéré les mottes, la chaine d'entrainement des patins porte-pinces effectue une translation de sens inverse de façon à regrouper sous la poussée du patin solidarisé avec la chaine, l'ensemble des autres patins porte-pinces.

L'ensemble porte-plateaux est composé d'un bâti incliné disposé de façon à assurer une translation des plateaux perpendiculairement au sens de déplacement de la machine : ce bâti a une longueur déterminée pour contenir au moins deux plateaux en ligne, afin de permettre à l'opérateur la mise en place d'un nouveau plateau lorsque le premier des plateaux placés sur le bâti est entièrement vidé. La translation des plateaux est assurée par un moteur hydraulique maintenu constamment en pression assurant l'entrainement séquentiel d'un jeu de deux chaines latérales par rapport aux plateaux et disposées chacune en boucle fermée entre deux roues dentées ; ces chaines étant réunies selon un intervalle correspondant à la longueur des plateaux, par des barrettes jouant le rôle de poussoirs. La rotation de l'arbre du moteur hydraulique et son arrêt, destinés à provoquer la translation du plateau de la valeur correspondante à l'écartement de deux rangées d'alvéoles, sont commandés par une roue à rochet solidaire de l'arbre moteur et assujettie en rotation à un cliquet basculant soumis à l'action d'un vérin hydraulique lui-même commandé par un dispositif fin de course monté sur le basculement des pinces de préhension et de transfert des mottes. Le châssis porte-plateaux est prolongé par un support-guide destiné à recevoir un plateau en attente ; le transfert de ce plateau sur le châssis porte plateaux, pour être pris en charge par les barrettes d'entrainement reliant les chaines latérales, s'effectue à l'aide d'un vérin hydraulique mis en action par l'opérateur après la mise en place d'un nouveau plateau. Sous le châssis porte-plateaux est disposé le dispositif d'extraction des mottes : celui-ci consiste dans un faisceau de tiges-poussoirs disposées en ligne transversalement par rapport au sens de translation des plateaux, en nombre correspondant à celui des alvéoles d'une même rangée transversale du plateau et d'écartement égal. Ces tiges poussoirs guidées en translation perpendiculairement au plateau sont animées d'un mouvement de monte et baisse sous l'action d'un jeu de leviers commandés par un vérin hydraulique dont l'action est synchronisée avec le déplacement du plateau, le basculement et la fermeture des pinces de préhension. La levée desdites tiges poussoirs est déterminée de façon à assurer le dégagement intégral des mottes par rapport au plateau.

L'ensemble de convoyage est constitué d'une chaine de manutention en boucle fermée qui porte à intervalles réguliers une série de nacelles ou godets suspendus constitués de deux parties, l'une fixe, l'autre ouvrante de forme conique. La trajectoire des godets comprend un tronçon horizontal au niveau duquel les mottes libérées par les pinces tombent à l'aplomb de celles-ci dans les godets. Des dispositifs de guidage sont prévus pour stabiliser les godets et éviter leur mouvement de basculement dans cette portion de trajectoire. La chaine de manutention est entrainée à l'aide d'un moteur hydraulique.

Selon un premier mode de réalisation de la machine selon l'invention, l'ensemble de convoyage assure en même temps la dépose au sol des plants, en continu. Cet ensemble de convoyage est constitué d'une chaine de manutention portant, suspendus à intervalles réguliers, des nacelles ou godets qui circulent en boucle fermée dans un plan incliné d'environ 30° par rapport à la verticale entre trois roues dentées selon une trajectoire triangulaire comportant une portion horizontale au cours de laquelle les godets sont chargés de plants et deux portions obliques concourant vers le point de largage au sol, à l'aplomb duquel s'effectue l'ouverture du godet.

L'ensemble de convoyage en vue de la dépose des plants au sol, selon un second mode de réalisation de l'invention, est constitué d'une chaîne de manutention en boucle fermée dont la trajectoire se situe dans un plan horizontal, laquelle chaine porte à intervalles réguliers une série de godets fixes de forme conique allongée, constitués de deux demi-parties, l'une fixe, l'autre ouvrante afin de permettre le largage du plant dans un dispositif de retournement constitué de deux disques en matière élastique formant flasques, entre lesquels est comprise une couronne circulaire dont la largeur est très légèrement supérieure au diamètre de la motte. En amont du point de prise en charge de la motte, l'un des flasques où les deux sont dévoyés vers l'extérieur à l'aide d'un ou de deux galets afin de faciliter l'introduction de la motte entre les flasques jusqu'à sa mise en appui sur la couronne circulaire, en aval dudit point de prise en charge de la motte ; l'un des flasques vient en appui sur une portion de rampe circulaire fixe tandis que l'autre flasque est dévoyé vers l'intérieur à l'aide de galets sur ressorts, afin d'assurer une bonne préhension de la motte au cours de son transfert vers un dispositif planteur également constitué de deux disques en matière élastique en contact l'un de l'autre, entre lesquels est destiné à venir s'inscrire le feuillage du plant. A cet effet, en amont du point de prise en charge du feuillage, l'un des flasques ou les deux sont dévoyés vers l'extérieur à l'aide d'un ou de deux galets afin de faciliter l'introduction du feuillage entre les flasques ; en aval du point de prise en charge, l'un des flasques vient en appui sur une portion de rampe circulaire fixe, l'autre flasque étant dévoyé vers l'intérieur au moyen de galets sur ressorts, afin d'assurer un serrage suffisant sur le feuillage au cours de son acheminement vers le sol. D'une telle disposition, il résulte que chaque plant occupe, dans l'un et l'autre de ces dispositifs de retournement et de plantation une position rayonnante par rapport aux centres de rotation de chaque dispositif et par conséquent une parfaite verticalité de plantation au sol. La profondeur de plantation de la motte dans le sol peut être adaptée à la nature du plant : la profondeur désirée s'obtient par réglage de l'entre axe entre les deux dispositifs, ainsi que par le réglage de position en hauteur du dispositif planteur par rapport au sol. D'une manière générale, la vitesse de défilement des godets est proportionnelle à la vitesse de défilement de la machine ; cette dernière étant supposée constante, la proportionnalité est établie en fonction du pas de pose désiré des plants et obtenue par l'intermédiaire d'un distributeur rotatif proportionnel alimentant le moteur hydraulique d'entrainement de la chaine de manutention portant les godets, lequel distributeur est en liaison avec l'une des roues porteuses du châssis par l'intermédiaire d'un variateur de vitesse mécanique. Dans le second mode de réalisation, la vitesse cinconférencielle de la face d'appui des mottes sur la couronne circulaire comprise entre les deux flasques du dispositif de retournement est égale à la vitesse linéaire de défilement des godets par la liaison hydraulique entre le moteur d'entrainement en translation de la chaine de manutention des godets et le moteur d'entrainement en rotation du dispositif de retournement. D'autre part, la vitesse circonférencielle du disque planteur est égale à la vitesse linéaire de déplacement de la machine, ceci étant assuré au moyen d'une liaison mécanique entre ledit dispositif et l'une des roues porteuses du châssis.

Les différentes phases successives, depuis l'extraction des mottes des plateaux jusqu'à la dépose des plants au sol sont commandées à partir d'un automate programmable.

Les dessins annexés illustrent, à titre d'exemple, une machine conforme à la présente invention. Ceux-ci représentent :

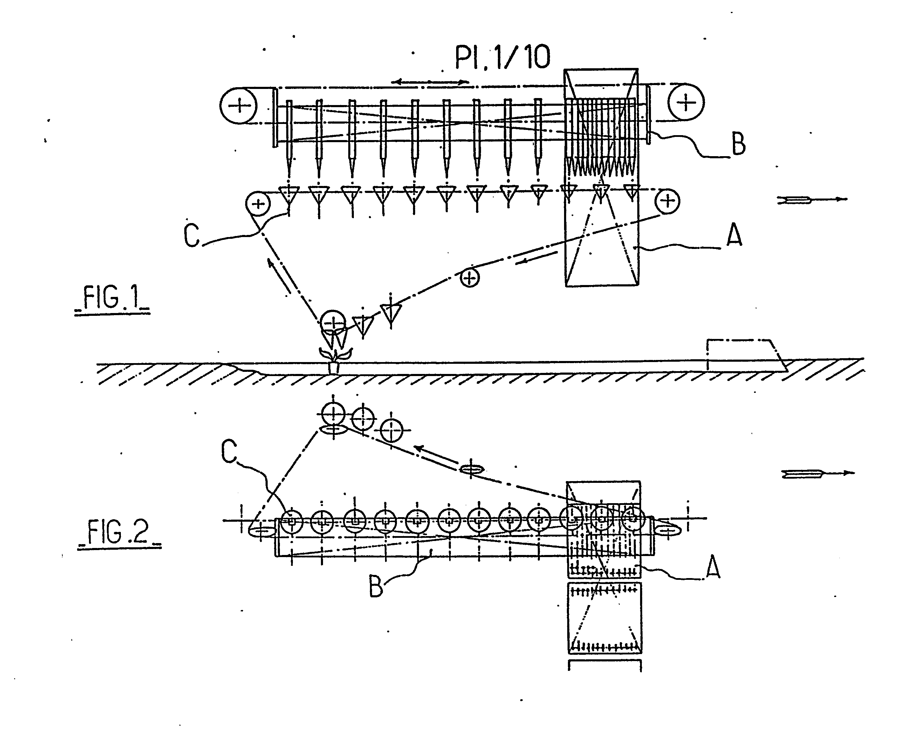

- en figures 1, 2 et 3, respectivement les vues en élévation, de dessus et transversale de l'arrière, d'un premier mode de réalisation de la machine, le dessin se limitant à une représentation schématique du plan de translation des plateaux, le plan de translation des patins supports de pinces pour mise à écartement de ceux-ci et leur basculement, le plan de circulation des godets de l'ensemble de convoyage ;

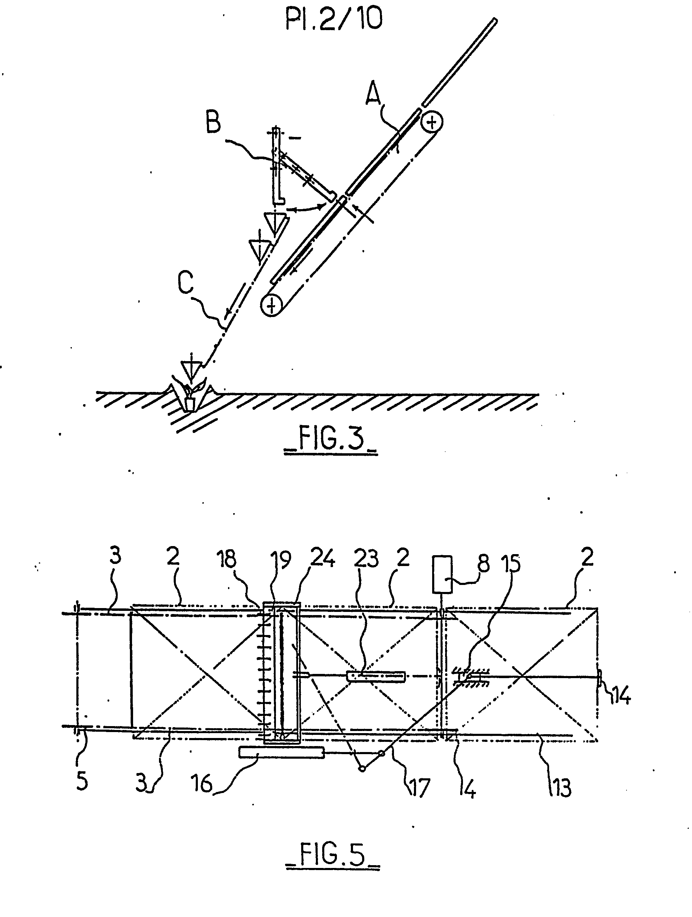

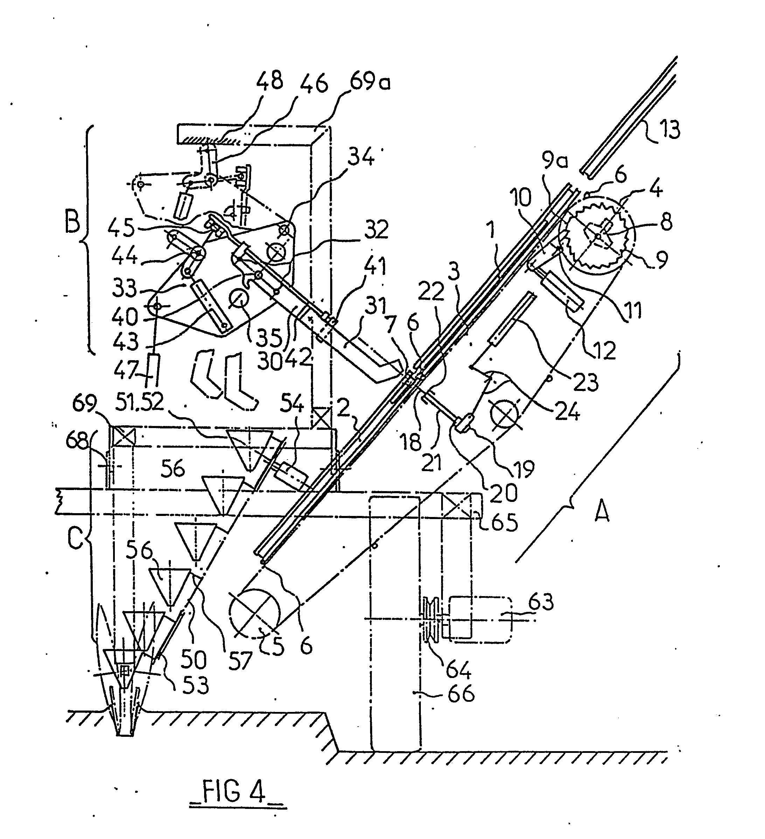

- en figure 4, une vue transversale de l'arrière de la machine ;

- en figure 5, une vue de dessus de l'ensemble porte-plateaux ;

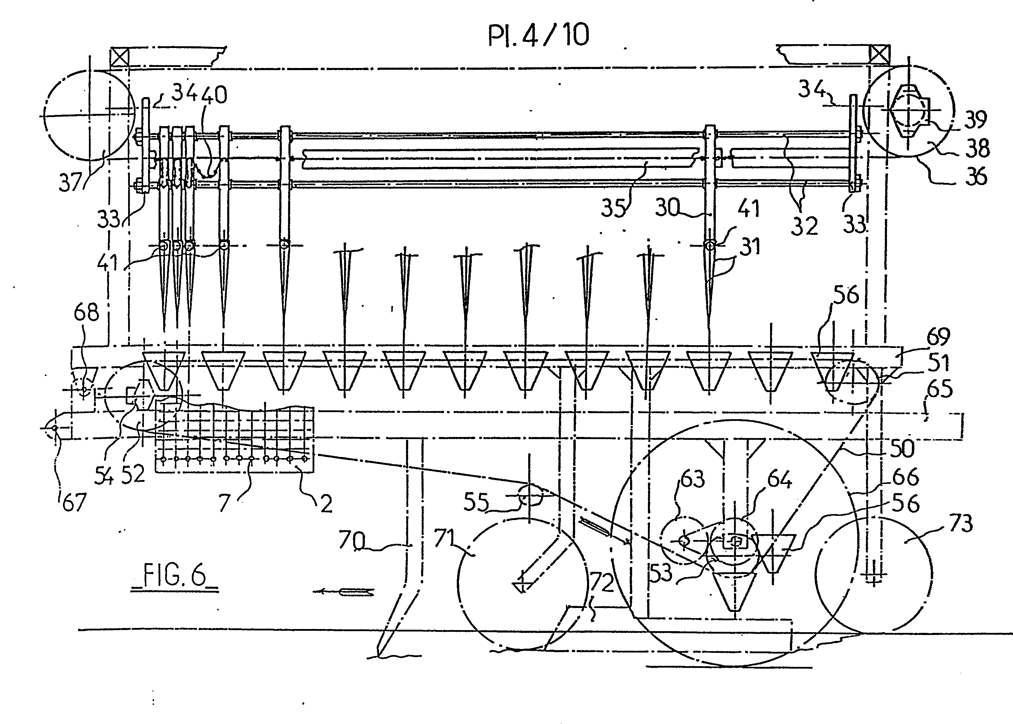

- en figure 6, une vue partielle en élévation de la machine montrant le mécanisme de mise à écartement des pinces pour le démariage et le largage des plants au-dessus des godets du dispositif de convoyage ;

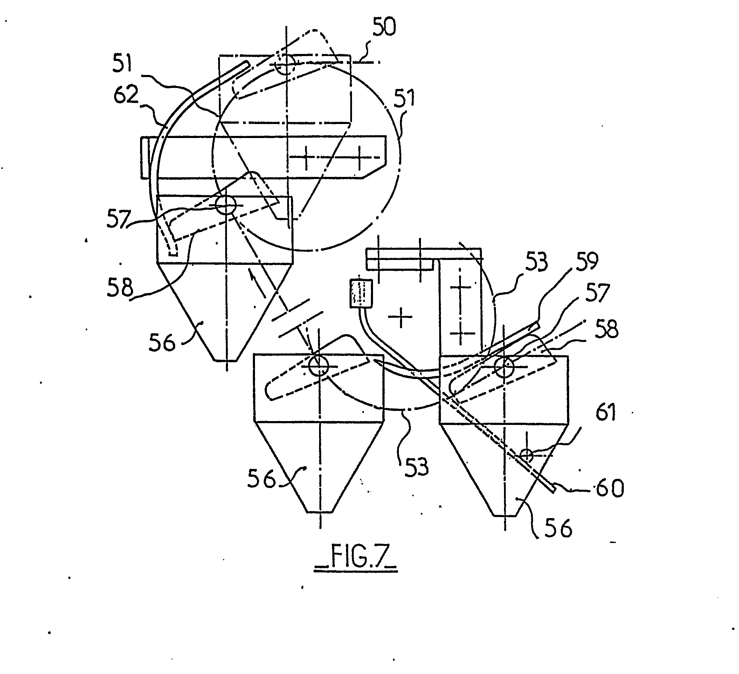

- en figure 7, une vue du détail des dispositifs de stabilisation des godets en parties haute et basse de leur trajectoire correspondant aux points de prise en charge du plant et de largage au sol de celui-ci ;

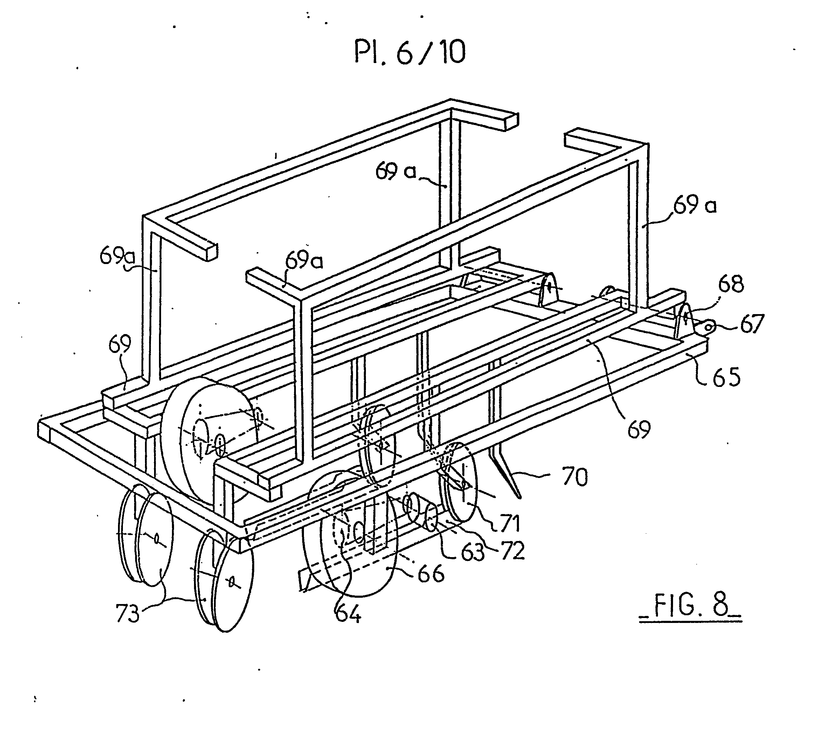

- en figure 8, une vue en perspective de l'ensemble du châssis de la machine ;

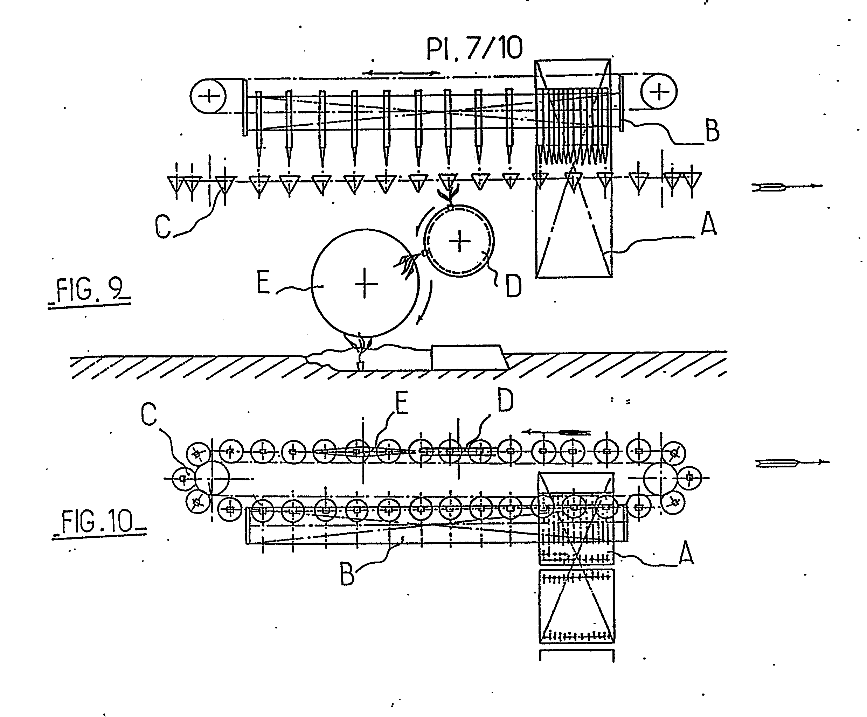

- en figures 9, 10 et 11, respectivement, les vues en élévation, de dessus et transversale de l'arrière, du second mode de réalisation de la machine ; le dessin se limitant à une représentation schématique du plan de translation des plateaux, du plan de translation des patins supports de pinces pour mise à écartement de ceux-ci et leur basculement, du plan de circulation des godets de l'ensemble de convoyage et du plan de rotation des dispositifs de retournement et de plantation ;

- en figure 12, une vue transversale de l'arrière de la machine, selon le second mode de réalisation ;

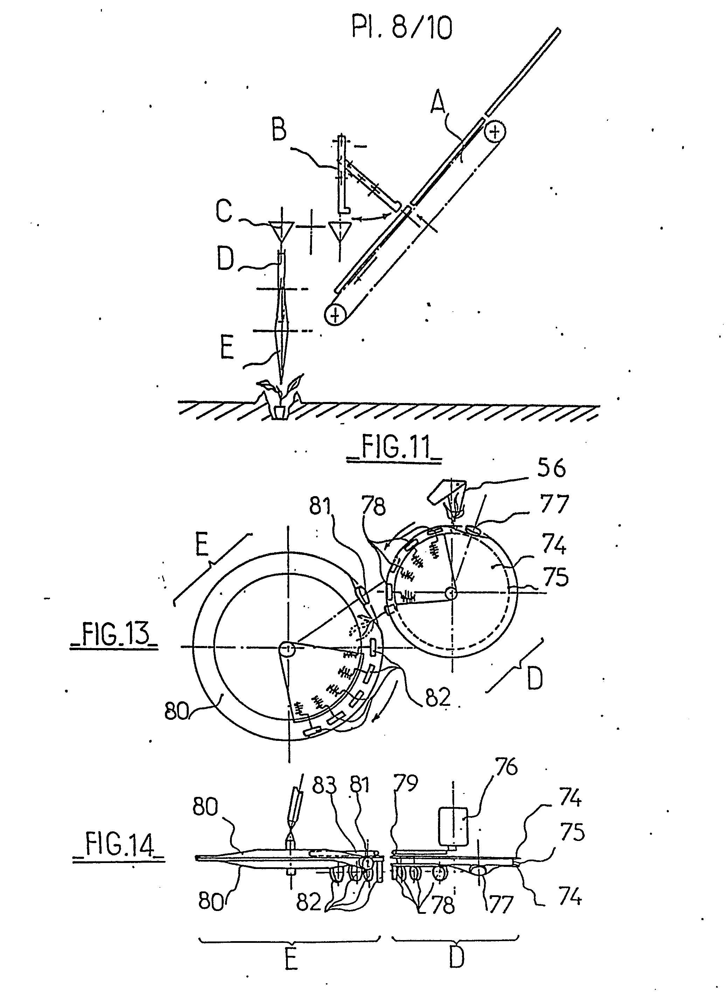

- en figures 13 et 14, des vues en élévation et de dessus de l'ensemble de dispositifs de retournement et de plantation ;

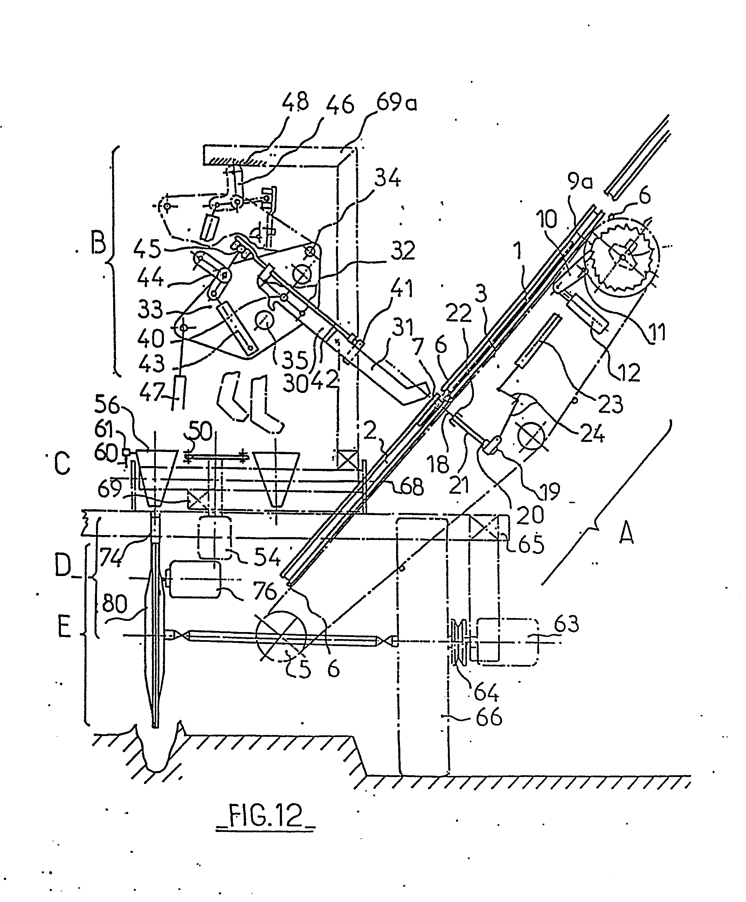

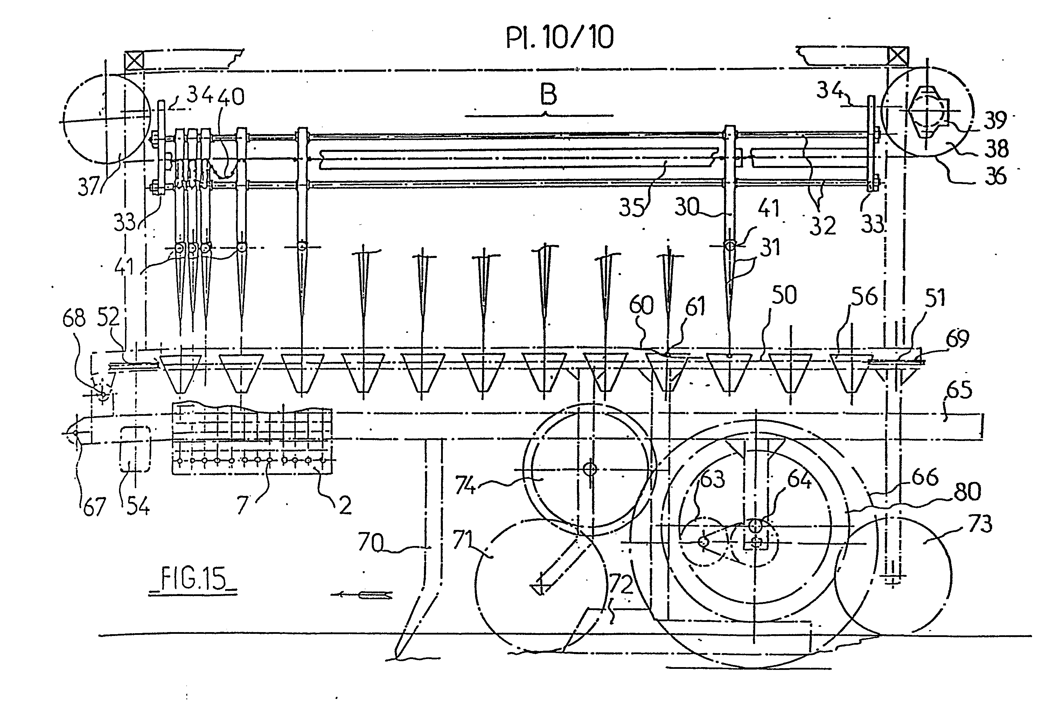

- en figure 15, une vue partielle en élévation de la machine montrant le mécanisme de mise à écartement des pinces pour le démariage et le largage des plants au-dessus des godets du dispositif de convoyage.

Tel que représenté, fig. 1, 2 et 3, la machine comporte, regroupés sur un châssis semi-porté équipé de deux roues et d'un moyen d'attelage à un tracteur :

- un ensemble porte-plateaux A équipé d'un dispositif d'extraction des mottes,

- un ensemble B de prise en charge, de démariage, et de transfert des plants en mottes,

- un ensemble C de convoyage et de dépose des plants au sol.

- un ensemble de préparation et de ragréage du sol.

L'ensemble porte-plateaux A est constitué d'un bâti 1, fig. 4, incliné d'environ 40° par rapport à la verticale, muni de glissières latérales de guidage entre lesquelles coulissent en translation les plateaux 2 selon une direction perpendiculaire au déplacement de la machine. Cette translation est obtenue à l'aide d'un jeu de deux chaines de manutention latérales 3 disposées en boucle fermée entre une roue dentée menante 4 et une roue dentée menée 5. La trajectoire de chaque chaine dans un plan vertical comporte en partie supérieure un tronçon rectiligne parallèle aux glissières de guidage et de longueur au moins égale à la longueur de deux plateaux consécutifs. Ces chaines sont reliées entre elles par des barrettes transversales 6 placées à intervalles réguliers correspondant sensiblement à la longueur d'un plateau : ces barrettes assurent l'entrainement en translation sans glissement des plateaux. Dans l'exemple décrit, les plateaux comportent vingt rangées transversales de douze alvéoles 7. La translation des plateaux doit donc s'effectuer d'une façon séquentielle selon un déplacement égal à l'intervalle séparant lesdites rangées. A cet effet le moteur hydraulique 8 sur l'arbre duquel sont clavetées les roues dentées menantes 4, comporte une roue à rochet 9 solidaire dudit arbre et munie de vingt dents ; dans le creux de denture de cette roue à rochet s'inscrit un cliquet 10 basculant autour d'un axe 11 sous l'action d'un vérin hydraulique 12. A chaque dégagement momentané du cliquet synchronisé avec l'extraction des mottes de la rangée d'alvéoles concernée, le moteur hydraulique 8 maintenu constamment en pression provoque la translation du plateau nécessaire à placer la rangée d'alvéoles suivante à l'aplomb du dispositif d'extraction. Le bâti porte-plateaux est prolongé en partie haute par un support guide 13 sur lequel l'opérateur place un plateau en attente, fig. 5 : le transfert de celui-ci sur le bâti 1 s'effectue à l'aide d'un poussoir 14 placé à l'extrémité d'une tige guidée en translation selon l'axe longitudinal du bâti au moyen d'un coulisseau 15 circulant dans une glissière axiale, ladite translation étant commandée par un vérin hydraulique 16 agissant sur une biellette 17 articulée sur le coulisseau 15.

La figure 4 représente le premier plateau en position telle que la dernière rangée d'alvéoles se situe à l'aplomb du dispositif d'extraction ; le cliquet 10 en basculant va libérer la roue à rochet 9, laquelle comporte dans cette zone une dent 9a dont la longueur de tête est telle que l'intervalle séparant les deux creux de denture successifs qui l'encadrent correspond à la distance séparant ladite dernière rangée d'alvéoles du premier plateau et la première rangée du plateau suivant, c'est-à-dire deux fois la distance de ces rangées aux bords des plateaux concernés augmentée de l'épaisseur d'une barrette d'entrainement 6. Lorsque la barrette 6 retenant le premier plateau en partie basse a atteint la roue menée 5, elle s'éclipse par rotation de celle-ci : le plateau ainsi libéré est recueilli sur une tablette de stockage prévue en partie basse de la machine, non représentée. Le deuxième plateau, pendant toute la durée de déchargement du premier, est poussé de façon continue par le poussoir 14 commandé par le vérin 16 ; il est poussé au moins jusqu'à ce que la barrette 6 du niveau supérieur entre en action. Ensuite, commandé par une fin de course, le poussoir 14 revient en position de départ. L'opérateur peut alors placer un plateau en attente et remettre en action le poussoir 14 qui prend alors en charge ce nouveau plateau et le déplace derrière le précédent jusqu'au cycle suivant.

Le dispositif d'extraction des mottes consiste dans un faisceau de tiges-poussoirs 18 au nombre de douze dans l'exemple décrit, implantées verticalement sur une traverse 19, à intervalles réguliers correspondant aux intervalles séparant les alvéoles d'une même rangée du plateau, réalisant ainsi une sorte de peigne dont les dents sont dirigées vers le haut, lequel peigne est animé d'un mouvement alterné de monte et baisse, guidé en translation au moyen de deux douilles à billes 20 fixées aux extrémités de la traverse 19 et glissant sur deux colonnes de guidage 21 montées fixes sur le bâti porte-plateaux 1. L'extrémité des tiges-poussoirs est en forme d'aiguille épaulée, la partie aiguille étant destinée à maintenir la motte extraite de l'alvéole du plateau sous la poussée de la partie épaulée. Les tiges-poussoirs traversent dans leur translation

- 12 -

une traverse perforée fixe 22 solidaire du bâti. Le mouvement de monte et baisse est obtenu à partir d'un vérin hydraulique 23 et d'un jeu de biellettes 24.

L'ensemble B de prise en charge, de démariage et de transfert des mottes, fig. 4 et 6, consiste dans une batterie de pinces de préhension, au nombre de douze dans l'exemple décrit, constituée chacune d'un patin porte-pinces 30 les flancs latéraux duquel sont prolongés par deux lames flexibles 31 dont les extrémités convergentes en position de fermeture sont jointives. Les patins porte-pinces sont montés coulissants sur deux tiges de guidage parallèles 32 dont les extrémités sont implantées dans deux flasques supports 33, basculants autour d'un axe 34 et entretoisés par deux tubes 35 ; les tiges de guidage 32 sont disposées transversalement au sens de translation des plateaux. Ces tiges 32 sont de faible diamètre, tendues entre les deux flasques supports 33 pour, d'une part, supprimer la flèche et, d'autre part, permettre la réalisation de patins porte-pinces très étroits, correspondant à l'espacement des mottes sur un plateau alvéolé. La faculté de déplacement des patins porte-pinces est destinée à permettre au départ : le positionnement des pinces en regard de chaque alvéole d'une même rangée transversale du plateau afin de prendre en charge la motte qui vient d'en être extraite, et, le positionnement terminal des mêmes pinces au-dessus des nacelles ou godets suspendus de l'ensemble de convoyage C de la machine, c'est-à-dire passer d'un écartement minimum des patins porte-pinces à un écartement maximum de ceux-ci. La translation des patins porte-pinces 30 est assurée à l'aide d'une chaine de manutention 36 disposée en boucle fermée entre une roue dentée libre 37 et une roue dentée d'entrainement 38 clavetée sur la sortie d'arbre d'un moteur hydraulique 39. Un des patins porte-pinces d'extrémité de la batterie est relié à la chaine 36 : pour passer de la position d'écartement minimum à la position d'écartement maximum, ce patin solidaire de la chaine assure l'entrainement des autres patins au moyen d'une chaine intercalaire 40 dont les extrémités sont fixées en un point de chaque

- 13 -

patin et reliant les patins consécutifs entre eux, dont la mise en extension maximum correspond à l'écartement des nacelles ou godets suspendus. Le retour à la position d'écartement minimum des patins porte-pinces qui place ceux-ci en appui les uns sur les autres s'effectue par l'inversion du sens de rotation du moteur hydraulique 39. Le patin solidaire de la chaine repousse alors les autres patins au fur et à mesure jusqu'à leur regroupement complet. La chaine de manutention 36 longe chaque patin porte-pince. L'ouverture des pinces s'obtient à l'aide d'un curseur mobile 41 en téflon s'inscrivant entre les lames 31, lequel curseur porté à l'extrémité d'une tige coulissante 42 est mobile en translation sous l'action de vérins hydrauliques 43, dont le corps est fixé au flasque 33 et dont la tige provoque le pivotement autour d'un axe 44 d'une barrette 45 reliant deux cames 46 et commandant la translation simultanée de l'ensemble des tiges coulissantes 42.

Après prise en charge des mottes par les pinces, l'ensemble B bascule autour de l'axe 34 sous l'action de vérins hydrauliques 47 de façon à faire passer les pinces d'une position de prise en charge des mottes représentée en figure 4, sensiblement perpendiculaire aux plateaux, à une position de largage sensiblement verticale ; simultanément à cette phase de basculement se produit la mise à écartement maximum des patins porte-pinces. Lorsque cette position est atteinte, les cames 46 sont en appui sur des butées fixes 48 prévues sur le châssis ; les vérins 43 en exerçant leur poussée provoquent l'ouverture de chaque pince et les cames 46 échappent aux butées 48. La fin de la course des vérins 43 place les pinces en position de recul par rapport au point de largage des mottes évitant ainsi la retenue du feuillage des plants par les pinces.

L'ensemble C de convoyage et de dépose des plants au sol, fig. 6 et 7, est constitué, selon le premier mode de réalisation, d'une chaine de manutention 50 circulant en boucle fermée dans un plan incliné d'environ 30° par rapport à la verticale ; cette chaine circule sur un jeu de trois roues dentées 51, 52 et 53 dont l'une d'elles 52, motrice,

- 14 -

est clavetée sur la sortie d'arbre d'un moteur hydraulique 54. La trajectoire comporte entre les roues dentées 51 et 52 un tronçon horizontal. La position de la roue dentée 53 détermine pour la chaine une portion de trajectoire descendante de faible pente entre les roues dentées 52 et 53 sous-tendue par un pignon 55 et une portion de trajectoire ascendante de forte inclinaison entre les roues dentées 53 et 51. Sur cette chaine de manutention sont montées à intervalles réguliers une série de nacelles ou de godets suspendus 56, le nombre desquels godets, sur la portion de trajectoire horizontale, est au moins égale au nombre de pinces, c'est-à-dire douze dans l'exemple décrit, lesdits intervalles correspondant à celui des pinces en position d'écartement maximum. Ces godets de forme conique sont divisés en deux parties par un plan médian formant avec le plan de défilement de la chaine 50 un angle d'environ 45° ; ils sont fixés sur la chaine d'une façon basculante autour d'un axe support 57 correspondant à un prolongement de l'axe d'articulation des maillons de la chaine. Cette fixation doit assurer une position verticale des godets tout au long de leur trajectoire. Cependant afin d'éviter tout mouvement pendulaire des godets, notamment lorsque ceux-ci se trouvent sur le tronçon horizontal de la trajectoire à l'aplomb des pinces 31 pour recevoir les plants ainsi qu'en partie basse de la trajectoire au point de largage des plants au sol, il est prévu sur chacun des godets et au niveau de l'axe support 57 un patin 58 faisant office de came, dont le chant supérieur constituant la face active comporte une partie rectiligne inclinée limitée à ses deux extrémités par un arrondi ; l'inclinaison de la partie rectiligne correspond sensiblement à celle du tronçon de trajectoire de la chaine 50 en amont de la roue dentée 53 correspondant au point de largage des plants. Lorsque le godet aborde cette zone de largage, le patin 58 vient en appui sur une rampe fixe inclinée 59 de position réglable assurant ainsi le maintien en position verticale du godet. A ce niveau est également prévu un dispositif d'ouverture du godet, lequel consiste en une rampe de guidage fixe 60 de position réglable sur laquelle accède un galet 61 monté sur la demi-partie mobile du godet correspondant à la partie arrière de celui-ci dans le sens de défilement des godets. Le réglage de la rampe 60 permet d'ajuster l'ouverture des godets suivant le volume du feuillage des plants. Après largage du plant, le godet stabilisé remonte vers la roue dentée 51 en prenant appui sur la partie terminale recourbée de la rampe 59. Lorsqu'il atteint la zone de ladite roue 51, correspondant à la variation de trajectoire de la chaine 50 pour accéder au tronçon horizontal, le patin 58 prend appui sur une autre rampe de guidage fixe 62 de position réglable comportant, dans l'ordre, une partie courbe prolongée par une partie rectiligne sensiblement parallèle à la partie rectiligne de la rampe 59, elle-même parallèle à la trajectoire de la chaine 50 entre le pignon tendeur 55 et la roue 53.

Le moteur hydraulique 54 est alimenté par un distributeur rotatif proportionnel 63 monté sur le châssis principal de la machine et en liaison mécanique avec l'une des roues porteuses par l'intermédiaire d'un variateur de vitesse mécanique 64, une telle disposition permettant d'adapter la vitesse de défilement des godets à celle de la machine en fonction du pas de plantation que l'on désire obtenir.

Tel que représenté en figure 8, la machine comporte un châssis principal 65 réalisé en mécano-soudure selon un cadre rectangulaire dont les longerons comportent chacun à l'arrière un jambage sur lequel est montée une roue porteuse 66 et en partie avant une traverse sur laquelle sont soudées des pattes d'attache 67 ; sur la face supérieure de la traverse sont prévus, dans l'exemple décrit, deux jeux de deux paliers d'axes horizontaux 68, constituant les axes de basculement de châssis secondaires 69 disposés symétriquement par rapport à l'axe médian longitudinal de la machine. Chaque châssis secondaire est constitué d'un cadre de base rectangulaire portant sur son côté longitudinal extérieur, les points de fixation de l'ensemble porte-plateaux A ainsi que deux potences 69a destinées à supporter l'ensemble B de prise en charge des mottes et de transfert, l'autre côté longitudinal du cadre portant les points de fixation de
l'ensemble C de convoyage et de dépose des plants au sol
ainsi que les dispositifs de préparation et de ragréage du
sol comprenant dans l'ordre d'intervention, un coutre
vertical 70 constitué d'un profilé plat dont le chant situé
vers l'avant est biseauté destiné à rejeter un éventuel
obstacle tel qu'une pierre, une racine ou autre avant le
passage d'une paire de coutres circulaires 71, pincés vers
l'avant, un soc   72 constitué de deux lames obliques entre
lesquelles s'effectue la dépose à fond de sillon du plant,
une paire de roues tasseuses 73 refermant le sillon après
plantation.

Chaque cycle de plantation commandé par l'automate
annexé à la machine correspondant au programme suivant :
- translation du plateau 2 sous l'action du moteur hydraulique 8 pour mise d'une rangée d'alvéoles 7 face aux
tiges-poussoirs 18 du dispositif d'extraction,
- extraction des mottes sous la poussée des tiges-poussoirs
à l'aide du vérin 23,
- prise en charge des mottes par fermeture des pinces 31 en
position regroupée, sous l'action des vérins 43,
- basculement des pinces en direction de la chaine à godets,
sous l'action des vérins 47 et simultanément mise en
extension du faisceau de pinces à leur espacement maximum
sous l'action du moteur hydraulique 39,
- comptage, sur la chaine à godets, du nombre de godets
vides, ou chargés lors du cycle précédent, et déclenchement
de l'ouverture des pinces 31 sous l'action des vérins 43
au-dessus des godets vides de l'ensemble de convoyage et
largage des plants,
- regroupement des pinces à leur espacement minimum,
- basculement des pinces pour mise en place de celles-ci
perpendiculairement à une nouvelle rangée d'alvéoles du
plateau amené en position sous l'action du moteur
hydraulique 8 et du vérin hydraulique 16.

C'est ainsi que les flasques support 33 et leur
dispositif de commande d'ouverture de pinces peuvent être
montés basculants non plus autour de l'axe 34 situé sur la potence 69a, mais sur un levier lui-même basculant autour d'un axe situé à son extrémité sous l'action d'un vérin, le basculement de celui-ci permettant après prise en charge du feuillage et de la tige des plants par les pinces, d'extraire ceux-ci des alvéoles du plateau supprimant dans certains cas le dispositif tiges-poussoirs.

De même, on peut prévoir, grâce à la présence de l'automate programmable, une modification du cycle pour réaliser simultanément l'opération d'extraction des mottes et leur prise en charge par les pinces afin d'utiliser des poussoirs simples non munis d'aiguilles ; cette modification du cycle permet également un gain de temps puisque, normalement, dans le cas des poussoirs 18 à aiguilles, les pinces, après préhension des mottes, doivent attendre le retrait desdites aiguilles de l'intérieur des mottes avant d'emmener lesdites mottes vers le dispositif de convoyage C. Dans ce cas, l'extrémité des poussoirs 18 peut être simplement pointue, de forme conique pour se centrer plus aisément dans les trous du plateau dessous chaque motte et pour s'incruster partiellement dans le substrat composant la motte.

On décrit maintenant le second mode de réalisation de la machine, fig. 11, en conservant, pour les éléments communs, les mêmes repères :
- l'ensemble porte plateaux A équipé du dispositif d'extraction des mottes,
- l'ensemble B de prise en charge et de transfert des mottes,
- l'ensemble C de convoyage des mottes

- un dispositif D de retournement des plants,
- un dispositif E de plantation.

L'ensemble C de convoyage, fig. 9, 10, 13 et 14, est constitué d'une chaine de manutention 50 circulant en boucle fermée dans un plan horizontal entre deux roues dentées libre 51 et motrice 52, cette dernière étant clavetée sur la sortie d'arbre d'un moteur hydraulique 54 alimenté par le distributeur rotatif proportionnel 63 monté sur le châssis principal de la machine et en liaison mécanique avec l'une des roues porteuses au moyen d'un variateur de vitesse mécanique 64. Sur la chaine de manutention sont montés à intervalles réguliers des godets 56 de forme tronconique allongée, en nombre, sur la longueur de trajectoire de la chaine entre les deux axes des roues dentées, au moins égal au nombre de pinces, leur écartement correspondant à celui des pinces en position d'écartement maximum. Le sens de translation de la chaine est tel que les godets circulent de l'arrière vers l'avant de la machine sur la partie de trajectoire située en-dessous du plan d'ouverture des pinces et de l'avant vers l'arrière de la machine sur la partie de trajectoire disposée au-dessus des dispositifs de retournement et de plantation. Les godets de forme pyramidale allongée, à base carrée, disposés pointe en bas sont constitués de deux demi-parties l'une fixe, l'autre mobile de façon à permettre l'ouverture du godet par pivotement autour d'un axe formant un angle de 45° avec la direction de défilement de la chaine, la demi-partie ouvrante du godet étant celle qui est située en avant dans le sens du défilement. Cette ouverture est provoquée à l'aplomb du point de largage au-dessus du dispositif de retournement D par la mise en appui sur une rampe de guidage fixe 60 d'un galet 61 solidaire de la demi-partie ouvrante.

Le dispositif de retournement D est constitué de deux disques 74 en matière souple et élastique, caoutchouc par exemple, disposés de part et d'autre d'une couronne circulaire 75 dont la largeur est très légèrement supérieure au diamètre de la motte. La différence des rayons des disques et de la couronne correspond sensiblement à la hauteur de la motte. L'ensemble disque et couronne est entrainé en rotation à l'aide d'un moteur hydraulique 76 dont la vitesse est ajustée à la vitesse de défilement des godets, c'est-à-dire à celle du moteur hydraulique 54. Au moins, un des disques est dévoyé vers l'extérieur en amont du point de largage du plant par le godet 56, au moyen d'un galet 77 opérant sur la bordure interne du disque, afin de faciliter l'introduction de la motte, celle-ci venant par sa base, en butée sur la périphérie de la couronne circulaire 75. Aussitôt cette introduction, le disque est ramené vers sa position normale et soumis à l'action d'une batterie de galets presseurs 78 d'axes rayonnants agissant sur la face externe du disque selon un rayon supérieur à celui de la couronne 75, lesdits galets étant répartis sur une portion de secteur circulaire : en regard de celle-ci est montée une portion de rampe circulaire 79 sur laquelle s'appuie l'autre disque ; cette disposition assure un pinçage suffisant des mottes sans risque d'écrasement au cours du passage des disques entre ladite rampe et les galets presseurs. Le dispositif de retournement est monté sur le cadre rectangulaire constituant le châssis secondaire 69 ; sur ce même cadre est également fixé le dispositif de plantation E, lequel est constitué de deux disques 80 en matière souple et élastique telle que le caoutchouc par exemple, montés en contact l'un de l'autre. Ces disques sont destinés à saisir le feuillage de chaque plant au moment où le dispositif de retournement va libérer la motte du plant par retour des disques 74 à la position normale d'écartement, c'est-à-dire après le dernier galet presseur 78. Afin de faciliter la prise en charge du feuillage, au moins un des disques 80 est dévoyé vers l'extérieur au moyen d'un galet 81 placé en amont du point de libération de la motte par le dispositif de retournement, ledit galet opérant sur la bordure interne du disque ; le disque est aussitôt ramené à sa position normale et subit l'action d'une batterie de galets presseurs 82 d'axes rayonnants répartis sur une portion de secteur circulaire ; en regard de celle-ci est montée une portion de rampe circulaire 83 sur laquelle vient en appui l'autre disque. Une telle disposition assure un pinçage suffisant du feuillage du plant sans risque de mâcher celui-ci tout au long de sa préhension. Le dernier galet presseur dans l'ordre d'intervention est placé à une distance de la verticale de plantation passant par le centre des disques, telle que ceux-ci reprenant leur position normale dans cette zone libèrent le plant en position parfaitement verticale au creux du sillon.

La plantation à la profondeur désirée des plants peut être déterminée d'une façon précise en réglant la position de l'axe de rotation des disques 80 par rapport à l'axe du dispositif de retournement d'une part et par rapport au sol d'autre part. La vitesse circonférencielle du dispositif de plantation est égale à la vitesse d'avancement de la machine : à cet effet, l'entrainement des disques 80 est assuré à partir de l'une des roues porteuses de la machine au moyen d'un arbre de transmission avec accouplements à la cardan.

Compte-tenu de la faible épaisseur du dispositif planteur, celui-ci peut s'inscrire entre les roues plombeuses 71, l'action de celles-ci pouvant ainsi s'exercer au plus près du point de dépose du plant en fond de sillon pour refermer celui-ci et immobiliser le plant.

- REVENDICATIONS -

1.- Machine destinée à réaliser la plantation automatisée de plants de légumes ou de fleurs cultivés en mottes dans des plateaux alvéolés, en particulier pour les cultures en planches, constituée d'un ensemble châssis comportant au moins une unité de plantation constituée :

- d'un ensemble porte plateaux et d'extraction des mottes A ;

- d'un ensemble C de convoyage des mottes en vue de leur dépose au sol ;

- d'un ensemble de préparation et de réagréage du sol, caractérisée en ce que l'ensemble B de prise en charge et de transfert des mottes consiste dans une batterie de pinces d'un nombre égal à celui des alvéoles (7) d'une même rangée du plateau alvéolé, les pinces étant constituées chacune d'un patin porte-pinces (30), les flancs latéraux duquel sont prolongés par deux lames flexibles (31) dont les extrémités convergentes en position de fermeture sont jointives, lesquels patins porte-pinces sont montés coulissants sur deux tiges de guidage tendues parallèles (32) disposées transversalement au sens de translation des plateaux et dont les extrémités sont implantées dans deux flasques supports (33), basculants autour d'un axe (34) et entretoisés par deux tubes (35), la faculté de déplacement des patins porte-pinces sur lesdites tiges de guidage permettant à ceux-ci de passer d'un écartement minimum correspondant à la position des pinces en regard de chaque alvéole d'une même rangée du plateau à un écartement maximum correspondant à la position des pinces à l'aplomb des nacelles ou godets suspendus de l'ensemble C de convoyage.

2.- Machine selon la revendication 1, caractérisée en ce que la translation des patins porte-pinces (30) est assurée à l'aide d'une chaine de manutention (36) disposée en boucle fermée entre une roue dentée libre (37) et une roue dentée d'entrainement (38) clavetée sur la sortie de l'arbre d'un moteur hydraulique (39) un desdits patins porte-pinces d'extrémité solidaire de ladite chaine entrainant les autres patins porte-pinces en translation pour mise

à écartement maximum à l'aide de chaines intercalaires de traction (40) reliant les patins entre eux et dont la mise en extension maximum place les pinces à l'aplomb des nacelles ou godets suspendus de l'ensemble (C) de convoyage, le retour à la position d'écartement minimum des patins, par inversion du sens de rotation du moteur hydraulique (39) s'opérant par regroupement desdits patins en appui les uns contre les autres sous la poussée du patin solidaire de la chaine.

3.- Machine selon les revendications 1 et 2, prises ensemble, caractérisée en ce que, après comptage, sur l'ensemble de convoyage (C), du nombre de godets vides, ou chargés lors du cycle précédent, le déclenchement de l'ouverture des pinces s'obtient à l'aide de curseurs (41) en téflon s'inscrivant entre les lames flexibles (31), lesquels curseurs portés à l'extrémité de tiges coulissantes (42) sont mobiles en translation sous l'action de vérins hydrauliques (43) dont le corps est fixé aux flasques (33) et dont la tige provoque le pivotement autour d'un axe (44) d'une barrette (45) reliant deux cames (46) et commandant la translation simultanée de l'ensemble des tiges coulissantes (42).

4.- Machine selon les revendications 1, 2 et 3, prises ensemble, caractérisée en ce que l'ensemble (B) de prise en charge des mottes bascule autour de l'axe (34) sous l'action de vérins hydrauliques (47) pour faire passer les pinces d'une position de prise en charge des mottes, sensiblement perpendiculaire au plateau alvéolé, à une position de largage desdites mottes dans les nacelles ou godets suspendus de l'ensemble (C) de convoyage, la mise à écartement maximum des patins porte-pinces s'effectuant simultanément à cette phase de basculement de l'ensemble (B).

5.- Machine selon les revendications 1, 2, 3 et 4, prises ensemble, caractérisée en ce qu'en position verticale de largage des pinces, les cames (46) sont en appui sur des butées fixes (48) fixées sur les potences (69a) des châssis secondaires, et échappent à celles-ci sous la poussée des vérins (43) provoquant l'ouverture des pinces, la fin de course desdits vérins plaçant les pinces en position de recul par rapport à la position verticale de largage évitant la retenue du feuillage des plants par les pinces.

6.- Machine selon l'ensemble des revendications 1 à 5, caractérisée en ce que l'ensemble (C) de convoyage est constitué d'une chaine de manutention (50) portant suspendus à intervalles réguliers, des nacelles ou godets (56) et circulant en boucle fermée dans un plan incliné d'environ 30° par rapport à la verticale pour réaliser, au niveau de la partie basse de la boucle, la dépose au sol des mottes ; la chaine (50) circule sur un jeu de trois roues dentées (51, 52, 53), dont l'une (52) est entrainée par un moteur hydraulique (54), la trajectoire de ladite chaine étant horizontale entre les roues (51 et 52), descendante selon une faible pente et sous-tendue par un pignon (55) entre les roues (52 et 53) et ascendante selon une forte inclinaison entre les roues dentées (53 et 51), ces deux portions obliques de trajectoire concourant vers le point de largage au sol des plants au niveau de la roue (53), le nombre des nacelles ou godets (56) sur la portion de trajectoire horizontale étant au moins égale au nombre de pinces de l'ensemble (β) de prise en charge.

7.- Machine selon la revendication 6, caractérisée en ce que que les nacelles ou godets (56) de forme conique sont divisés en deux parties, l'une fixe, l'autre mobile selon un plan médian formant avec le plan de défilement de la chaine de manutention (50) un angle d'environ 45°, lesquels godets sont fixés sur la chaine d'une façon basculante autour d'un axe support (57) correspondant à un prolongement de l'axe d'articulation des maillons de la chaine.

8.- Machine selon les revendications 6 et 7, prises ensemble, caractérisée en ce que les godets (56) circulant en position verticale tout au long de la trajectoire de la chaine, comportent, montée sur la demi-partie fixe de chaque godet au niveau de l'axe (57), une came (58) dont le chant supérieur comporte une partie rectiligne inclinée limitée à ses deux extrémités par un arrondi, l'inclinaison de ladite partie rectiligne correspondant sensiblement à celle du tronçon de trajectoire de la chaine (50) en amont de la roue dentée (53), laquelle came vient en appui sur une rampe fixe (59) de position réglable située au niveau de la roue (53) ou sur une rampe fixe (62) de position réglable située au niveau de la roue dentée (51), ces rampes (59 et 62) étant destinées à interdire tout mouvement pendulaire des godets respectivement au moment d'atteindre le point de largage du plant au sol ou la portion de trajectoire horizontale de la chaine pour la prise en charge des mottes par les godets, lesdites rampes comportant à cet effet une partie rectiligne inclinée sensiblement parallèle à la trajectoire de la chaine (50) entre le pignon tendeur (55) et la roue (53).

9.- Machine selon l'ensemble des revendications 6, 7 et 8, caractérisée en ce que le dispositif d'ouverture des godets au point de largage du plant au sol consiste dans une rampe de guidage fixe (60) de position réglable sur laquelle prend appui un galet (61) monté sur la demi-partie mobile du godet correspondant à la partie arrière de celui-ci dans le sens de défilement des godets.

10.- Machine selon l'ensemble des revendications 1 à 5, caractérisée en ce que l'ensemble (C) de convoyage débite dans un dispositif (D) de retournement des plants associé à un dispositif planteur (E) assurant une parfaite verticalité de plantation du plant dans le sillon à la profondeur désirée en fonction de la nature des plants, ledit sillon étant refermé sitôt la dépose du plant.

11.- Machine selon la revendication 10, caractérisée en ce que l'ensemble (C) de convoyage constitué d'une chaine de manutention (50) portant suspendus à intervalles réguliers des godets (56) circule dans un plan horizontal selon une boucle fermée entre une roue dentée libre (51) et une roue dentée motrice (52) clavetée sur la sortie d'arbre d'un moteur hydraulique (54) alimenté par un distributeur rotatif proportionnel (63) monté sur le châssis principal de la machine et en liaison mécanique avec l'une des roues porteuses par l'intermédiaire d'un variateur de vitesse mécanique (64), le sens de translation de la chaine étant tel que les godets circulent de l'arrière vers l'avant de la machine sur la partie de trajectoire située en-dessous du plan d'ouverture des pinces (31) de l'ensemble (B) de prise en charge et de l'avant vers l'arrière de la machine sur la partie de trajectoire disposée au-dessus des dispositifs de retournement et de plantation, la partie ouvrante des godets étant celle qui est située en avant dans le sens de défilement de la machine.

12.- Machine selon la revendication 10, caractérisée en ce que le dispositif (D) de retournement des plants est constitué de deux disques (74) en matière souple et élastique disposés de part et d'autre d'une couronne circulaire (75) dont la largeur est très légèrement supérieure au diamètre de la motte, la différence des rayons des disques et de la couronne correspondant sensiblement à la hauteur de la motte ; au moins un des disques (74) est dévoyé vers l'extérieur en amont du point de largage du plant par le godet (56) au moyen d'un galet (77) opérant sur la bordure interne du disque afin de faciliter l'introduction de la motte jusqu'à la mise en butée de sa base sur la périphérie de la couronne circulaire (75), lequel disque est ramené, sitôt cette introduction, vers sa position normale et soumis à l'action d'une batterie de galets presseurs (78) d'axes rayonnants agissant sur la face externe du disque selon un rayon supérieur à celui de la couronne (75) et répartis sur une portion de secteur circulaire en regard de laquelle est montée une portion de rampe circulaire (79) sur laquelle prend appui l'autre disque, l'action conjuguée des galets presseurs et de la rampe assurant un pinçage suffisant des mottes sans risque d'écrasement au cours du passage des disques entre ladite rampe et lesdits galets presseurs.

13.- Machine selon la revendication 12, caractérisée en ce que le dispositif (D) de retournement des plants est fixé sur le châssis secondaire de la machine et est entrainé en rotation à l'aide d'un moteur hydraulique (76) dont la vitesse est ajustée à la vitesse de défilement des godets, c'est-à-dire à la vitesse du moteur hydraulique (54) commandant ce défilement.

14.- Machine selon l'ensemble des revendications 6 à 13, caractérisé en ce que la vitesse de défilement des godets (56) est ajustée à la vitesse d'avancement de la machine en fonction du pas de plantation à obtenir, en alimentant le moteur hydraulique (54) d'entrainement de la chaine de manutention (50) portant les godets par un distributeur rotatif proportionnel (63) en liaison mécanique avec l'une des roues porteuses du chậssis par l'intermédiaire d'un variateur de vitesse mécanique (64).

15.- Machine selon la revendication 10, caractérisée en ce que le dispositif planteur (E) est constitué de deux disques (80) en matière souple et élastique montés en contact l'un de l'autre, destinés à saisir le feuillage de chaque plant au moment où le dispositif (D) de retournement est sur le point de libérer la motte du plant par retour des disques (74) à la position normale d'écartement ; un des disques (80) est dévoyé vers l'extérieur en amont du point de libération de la motte par le dispositif (D) de retournement au moyen d'un galet (81) opérant sur la bordure interne du disque afin de faciliter la prise en charge du feuillage, lequel disque est aussitôt ramené vers sa position normale et subit l'action d'une batterie de galets presseurs (82) d'axes rayonnants agissant sur la face externe du disque et répartis sur une portion de secteur circulaire en regard de laquelle est montée une portion de rampe circulaire (83) sur laquelle prend appui l'autre disque, l'action conjuguée des galets presseurs et de la rampe assurant un pinçage suffisant du feuillage du plant sans risque de machure au cours du passage des disques entre ladite rampe et lesdits galets presseurs, le dernier de ceux-ci, dans l'ordre de leur intervention, étant placé à une distance de la verticale de plantation passant par le centre des disques, telle que les disques reprenant leur position normale dans cette zone libèrent le plant en position parfaitement verticale au creux du sillon.

16.- Machine selon la revendication 15, caractérisée en ce que le dispositif planteur (E) est fixé sur le châssis secondaire de la machine réglable en hauteur par rapport au sol, et est entrainé en rotation à partir d'une des roues porteuses de la machine par l'intermédiaire d'un arbre de transmission avec accouplements à la cardan dans le but d'assurer une vitesse de rotation circonférencielle des disques égale à la vitesse d'avancement de la machine.

17.- Machine selon l'une quelconque des revendications 1 à 16, caractérisée en ce qu'elle comporte un châssis principal (65), réalisé en mécano-soudure selon un cadre rectangulaire dont les longerons comportent chacun à l'arrière un jambage sur lequel est montée une roue porteuse (66) et en partie avant une traverse sur laquelle sont soudées des pattes d'attache (67) au dispositif d'attelage trois points d'un tracteur, sur laquelle traverse sont montés des paliers d'axes horizontaux (68) disposés symétriquement par rapport à l'axe médian longitudinal de la machine dans le but d'assurer une régularité de profondeur de plantation, quelle que soit la planéité de la planche de culture et la variation de hauteur de celle-ci par rapport aux passe-pieds sur lesquels circulent les roues porteuses du châssis principal, chaque châssis secondaire étant constitué d'un cadre de base rectangulaire, portant sur son côté longitudinal extérieur les points de fixation de l'ensemble porte-plateaux (A) ainsi que deux potences (69a) destinées à supporter l'ensemble (B), de prise en charge des mottes et de transfert, l'autre côté longitudinal du cadre portant les points de fixation de l'ensemble (C) de convoyage et autres, ainsi que les dispositifs de préparation et ragréage du sol constitués dans l'ordre d'intervention d'un coutre vertical (70), d'une paire de coutres circulaires (71), d'un soc (72) constitué de deux lames obliques entre lesquelles s'effectue la dépose du plant à fond de sillon et d'une paire de roues tasseuses (73).

18.- Machine selon la revendication 17, caractérisée en ce que l'ensemble porte-plateaux (A) est constitué d'un bâti (1) incliné d'environ 40° par rapport à la verticale, muni de glissières latérales de guidage entre lesquelles coulissent en translation les plateaux alvéolés (2) selon une direction perpendiculaire au déplacement de la machine au moyen d'un jeu de deux chaines latérales (3) disposées en boucle fermée entre une roue dentée menante (4) et une roue dentée menée (5), la trajectoire de chaque chaine dans un plan vertical comprenant en partie supérieure un tronçon rectiligne parallèle aux glissières de guidage et de longueur au moins égal à la longueur de deux plateaux consécutifs, lesdites chaines étant reliées entre elles par des barrettes transversales (6) placées selon des intervalles réguliers correspondant à la longueur des plateaux, la translation desquels plateaux s'effectue de façon séquentielle selon un déplacement égal à l'intervalle séparant deux rangées transversales consécutives d'alvéoles (7).

19.- Machine selon la revendication 18, caractérisée en ce que l'entrainement séquentiel en translation de plateaux (2) est commandé par un moteur hydraulique (8) sur l'arbre de sortie duquel est clavetée la roue dentée menante (4) ainsi qu'une roue à rochet (9) munie d'un nombre de dents égal au nombre de rangées transversales d'alvéoles (7) du plateau, lequel moteur hydraulique (8) maintenu constamment en pression provoque la translation du plateau nécessaire pour placer successivement chaque rangée d'alvéoles à l'aplomb d'un dispositif d'extraction par libération succesive des dents de la roue à rochet par un cliquet (10) basculant autour d'un axe (11) sous l'action d'un vérin hydraulique (12), l'une des dents (9a) de ladite roue à rochet ayant une longueur de tête telle que l'intervalle séparant les creux de denture successifs qui l'encadrent correspond à la distance séparant la dernière rangée, du premier plateau et la première rangée du plateau suivant, c'est-à-dire deux fois la distance de ces rangées aux bords des plateaux concernés augmentée de l'épaisseur d'une barrette d'entrainement (6).

20.- Machine selon la revendication 18, caractérisée en ce que le bâti du dispositif porte-plateaux est prolongé en partie haute par un support-guide (13) destiné à recevoir un plateau en attente, le transfert duquel sur le bâti (1) s'effectue à l'aide d'un poussoir (14) placé à l'extrémité d'une tige guidée en translation selon l'axe longitudinal du bâti au moyen d'un coulisseau (15) circulant dans une glissière axiale, ladite translation étant commandée par un vérin hydraulique (16) agissant sur une biellette (17) articulée sur le coulisseau.

21.- Machine selon l'ensemble des revendications 17 à 20, caractérisée en ce qu'elle comporte un dispositif d'extraction des mottes des alvéoles (7) du plateau (2), constitué d'un faisceau de tiges-poussoirs (18) en nombre égal au nombre d'alvéoles de chaque rangée du plateau, implantées verticalement sur une traverse (19) à intervalles réguliers correspondant à l'espacement des alvéoles d'une même rangée réalisant une sorte de peigne dont les dents sont dirigées vers le haut, lequel peigne est animé d'un mouvement de monte et baisse alterné, guidé en translation au moyen de deux douilles à billes (20) fixées aux extrémités de la traverse (19) et coulissant sur deux colonnes de guidage (21) montées fixes sur le bâti porte-plateaux (1), laquelle translation est obtenue à l'aide d'un vérin hydraulique (23) et d'un jeu de biellettes (24).

22.- Procédé de plantation automatisée, en continu, de plants cultivés en mottes dans des plateaux (18) alvéolés, qui consiste, dans un premier temps, à sortir les mottes de leur alvéole du plateau au moyen du dispositif d'extraction (A) et à les saisir au moyen de l'ensemble (B) de prise en charge et de transfert puis, dans un deuxième temps, à les convoyer en vue de leur dépose au sol, caractérisé en ce qu'il consiste, préalablement à leur mise en place sur l'ensemble de convoyage (C), à les démarier au moyen d'une opération qui consiste à séparer les unes des autres, les tiges et/ou les feuilles des mottes voisines, habituellement emmêlées sur le plateau alvéolé.

23.- Procédé de plantation automatisée, selon la revendication 22, caractérisé en ce qu'il consiste à saisir, au moyen de l'ensemble (B) de prise en charge, une rangée de plants sur un plateau (18), puis à écarter, au moyen des pinces de préhension dudit ensemble (B), tout d'abord, ladite rangée par rapport à la rangée adjacente restant dans le plateau alvéolé, puis, sur ladite rangée, les plants adjacents eux-mêmes, l'un envers l'autre avant de les disposer sur l'ensemble de convoyage (C) en vue de leur dépose au sol.

PI. 1/10

FIG.1

FIG.2

B

C

A

C

B

A

1/10

0243264

PI.2/10

A

B

C

_FIG.3_

3  2  18  19  24  23  2  8  15  2

5  3  16  17  4  13

14

_FIG.5_

FIG 4

Pl. 4 / 10

FIG.6

0243264

Pl.5/10

_FIG.7_

_FIG. 8_

0243264

PI. 7/10

FIG. 9

FIG. 10

7/10.

0243264

_FIG.11_

_FIG.13_

_FIG.14_

FIG.12

Pl. 10/10

FIG.15

0243264

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | FR-A-2 432 265  (MAMETORA)<br><br>* Pages 3-11; figures 1-14 *<br><br>--- | 1,3,4, 21,22 | A 01 C  11/02 |
| A | US-A-3 103 186  (SAIFUKU)<br>* Column 2, lignes 6-72; colonnes 3,4; colonne 5, lignes 1-13; fig-ures 1-3 *<br><br>--- | 6-9 | |
| A | EP-A-0 043 427  (BUD ANTLE)<br><br>* Page 11, lignes 15-38; pages 12-16; figures 1-13 *<br><br>--- | 11,19, 20,21, 22 | |
| A | FR-A-1 245 013  (CARRE)<br><br>* Pages 2,3, figures 1,2,3 *<br><br>--- | 10,12, 13,15 | **DOMAINES TECHNIQUES RECHERCHES (Int. Cl.4)** |
| A | DE-C- 878 574  (ELSNER)<br>* Page 2, lignes 15-31, figure  1 *<br><br>----- | 10 | A 01 C<br><br>- |

Le présent rapport de recherche a été établi pour toutes les revendications

| Lieu de la recherche<br>LA HAYE | Date d'achèvement de la recherche<br>31-07-1987 | Examinateur<br>VERMANDER R.H. |
|---|---|---|